# EUROPÄISCHE PATENTSCHRIFT

(11) **EP 2 681 010 B1**
(45) Veröffentlichungstag und Bekanntmachung des Hinweises auf die Patenterteilung: **01.04.2015**
(21) Anmeldenummer: 12712974.0
(22) Anmeldetag: 28.02.2012
(51) Int. Cl.: G01D 9/00, B25B 23/142, G01L 25/00, H04Q 9/00, H04L 12/64

(54) **SYSTEM ZUR VERARBEITUNG VON MESSDATEN- UND/ODER MESSPARAMETERDATEN**
SYSTEM FOR PROCESSING MEASUREMENT DATA AND/OR MEASUREMENT PARAMETER DATA
SYSTÈME DE TRAITEMENT DE DONNÉES DE MESURE ET/OU DE DONNÉES DE PARAMÈTRES DE MESURE

(30) Priorität: 03.03.2011 DE 102011001074
(43) Veröffentlichungstag der Anmeldung: 08.01.2014
(73) Patentinhaber: Eduard Wille GmbH & Co KG, 42349 Wuppertal (DE)
(72) Erfinder: PAPE, Klaus, 42369 Wuppertal (DE); WAIND, David, 51503 Rösrath (DE); BUTANOWITZ, Horst, 47906 Kempen (DE); BACKHAUS, Michael, 44388 Dortmund (DE)
(74) Vertreter: RGTH
(86) Internationale Anmeldenummer: PCT/EP2012/053382
(87) Internationale Veröffentlichungsnummer: WO 2012/116998

(56) Entgegenhaltungen:
- DE-A1- 10 104 143
- DE-A1- 19 847 701
- DE-A1- 19 961 374
- DE-U1-202008 002 913
- US-A1- 2010 312 930
- US-B1- 6 845 279
- "GIGABIT SPEED MULTI-PROTOCOL CHIP AND ADAPTERS FOR NETWORK COMPUTING", IBM TECHNICAL DISCLOSURE BULLETIN, INTERNATIONAL BUSINESS MACHINES CORP. (THORNWOOD), US, Bd. 40, Nr. 10, 1. Oktober 1997 (1997-10-01), Seiten 13-15, XP000739405, ISSN: 0018-8689

## Beschreibung

### Technisches Gebiet

Die Erfindung betrifft ein System nach dem Oberbegriff des Anspruches 1.

Beim Auslesen von Daten aus verschiedenen Werkzeugen besteht das Problem, dass unterschiedliche Schnittstellen erforderlich sind. Ebenfalls können unterschiedliche Protokolle bei der Datenverbindung problematisch sein, so dass Systeme untereinander nicht kompatibel sind.

### Stand der Technik

Aus der DE 198 54 062 C1 ist ein Verfahren und eine Vorrichtung zur Ermittlung der Vorspannkraft bei Schraubverbindungen bekannt. Diese wird in sicherheitsrelevanten Anlagen, wie in Kernkraftwerken eingesetzt, in denen eine genaue Einhaltung der Vorspannkraft und eine Protokollierung des Anziehvorgangs oftmals gewünscht ist. Hierfür wird ein kapazitiver Sensor eingesetzt, wobei die elektrische Verbindung des Sensors mit einer Messelektronik über einen Stecker realisiert wird. Ein Mikroprozessor-System ist mit einer Standard-PC-Schnittstelle für eine Übertragung der Messdaten an ein PC bzw. Laptop ausgerüstet.

In der DE 199 61 374 A1 wird eine Vorrichtung zum Herstellen von Schraubverbindungen beschrieben. Diese umfasst eine Einrichtung zum Vorgeben eines Parameters der Schraubverbindung sowie eine Messeinrichtung zum Erfassen und Einhalten des Parameters. Weiterhin ist eine externe Datenverarbeitungs- und Datenspeichereinrichtung und eine Übertragungsstrecke zwischen der Vorrichtung und der Datenverarbeitungs- und Datenspeichereinrichtung vorhanden, wobei durch die Datenverarbeitungs- und Datenspeichereinrichtung der Parameter für die Schraubverbindung über die Übertragungsstrecke übermittelt wird.

Die DE 20 2008 002 913 U1 beschreibt eine Betätigungsvorrichtung zum Prüfen eines Drehmomentschlüssels. Mit dieser Betätigungsvorrichtung soll der Drehmomentschlüssel kalibriert werden. Gezeigt ist dort ein Schlüssel, der mit einem ersten Datenspeicher versehen ist. Der erste Datenspeicher ist an einer Kommunikationseinheit angeschlossen. Weiterhin ist ein Messwertaufnehmer vorhanden, der einen flüchtigen, zweiten Datenspeicher aufweist. Dieser zweite Datenspeicher ist ebenfalls an der Kommunikationseinheit angeschlossen.

### Darstellung der Erfindung: Aufgabe, Lösung, Vorteile

Der Erfindung liegt die Aufgabe zugrunde, ein System zu schaffen, das den Einsatz von Werkzeugen mit unterschiedlichen Protokollen erlaubt.

Diese Aufgabe wird durch ein System mit den kennzeichnenden Merkmalen des Anspruches 1 in Verbindung mit seinen Oberbegriffsmerkmalen erreicht.

Das erfindungsgemäße System erlaubt die Ausführung eines Verfahrens quasi eines "Werkzeugbenutzungsverfahrens" zum Sammeln, Verarbeiten und/oder Weiterleiten von Daten aus verschiedenen Werkzeugen mit unterschiedlichen Schnittstellen und Protokollen. Die Datenübertragung bzw. Datenweiterleitung kann bidirektional erfolgen. Die Werkzeuge erzeugen Messwerte und/oder speichern diese im Werkzeug selbst. Außerdem können die Werkzeuge einem Kalibrierintervall unterliegen. Das Sammeln, Verarbeiten und/oder Weiterleiten (bidirektional) der Daten erfolgt über die Datenverarbeitungsvorrichtung.

Die Erfindung kann auch als universeller Hub, Access Point oder Protokollwandler bezeichnet werden. Eingesetzt wird praktisch ein Gerät bzw. ein Zusatzgerät zur Protokollwandlung bzw. eine Prüfeinrichtung.

Durch die Erfindung können Einstellfehler durch einen Anwender oder Übertragungsfehler durch eine Prüfung mittels der Prüfeinrichtung aufgedeckt werden.

Außerdem können Messwerte und sonstige Daten automatisch dokumentiert und weiter ausgewertet werden. Durch die erfindungsgemäße Automatisierung bzw. des erfindungsgemäßen elektronischen Produkts wird die Effizienz gesteigert.

Ein weiterer Vorteil der Erfindung ist, dass Messfehler, eine Ermittlung der Messgenauigkeit und Messunsicherheitseinflüsse durch die Verwendung von Kalibrierdaten und direkt ermittelten Ergebnissen von Prüfungen am Einsatzort reduziert werden. Eine weitere Erhöhung des Schutzes ist möglich, wenn die Prüfung am Einsatzort vor und nach der Anwendung stattfindet und bewertet wird.

Die Erfindung kann bei Vorrichtungen zur Ermittlung der Vorspannkraft bei Schraubverbindungen eingesetzt werden. Insbesondere ist eine Verwendung in sicherheitsrelevanten Anlagen, insbesondere in Kernkraftwerken oder in der Luft- und Raumfahrt sehr vorteilhaft. Dort ist nämlich eine genaue Einhaltung der Vorspannkraft und eine Protokollierung des Anziehvorgangs gewünscht. Es können Mikroprozessor-Systeme mit einer Standard-PC-Schnittstelle für eine Übertragung der Messdaten an einem PC bzw. Laptop benutzt werden.

Eine Messeinrichtung zum Erfassen und Einhalten eines Parameters kann im erfindungsgemäßen System eingesetzt werden. Das System kann eine externe Datenverarbeitungs- und Datenspeichereinrichtung und eine Übertragungsstrecke zwischen der Vorrichtung und der Datenverarbeitungs- und Datenspeichereinrichtung umfassen.

Das erfindungsgemäße Gerät kann nach Prozessvorschriften vor seinem Einsatz zusätzlich mit einer Prüfeinrichtung überprüft werden. Zuvor werden die zuvor übermittelten Einstellungen und/oder Sollwerte erfasst und über die Datenverarbeitungseinrichtung geprüft und zurückgemeldet. Es kann geprüft werden, ob ein Anwender das Werkzeug korrekt eingestellt hat oder ob Werte korrekt elektronisch übernommen worden sind.

Daten können umgewandelt und an die Datenverarbeitungseinrichtung weitergeleitet werden. Diese dokumentiert und wertet diese Daten aus und trifft Entscheidungen über weitere Maßnahmen und/oder Prozessschritte auf Basis der vorliegenden Daten. Die Datenverarbeitungseinrichtung gibt dann eine Meldung an die relevanten Anwender zurück.

Das erfindungsgemäße Gerät kann Kalibriervorschriften unterliegen.

Weitere vorteilhafte Ausgestaltungen der Erfindung sind in den Unteransprüchen gekennzeichnet.

In einer vorteilhaften Weiterbildung des erfindungsgemäßen Systems ist vorgesehen, dass die Datenverarbeitungseinrichtung mit einer Datenbank und/oder weiteren Datenverarbeitungseinrichtungen insbesondere verbunden ist. Dadurch kann eine zentrale Datenbank, die beispielsweise über das Internet zugänglich ist, geschaffen werden, so dass eine zentrale Überwachung möglich ist.

Damit die Daten in einfacher und bequemer Weise ausgelesen werden können, werden in einer bevorzugten Ausführungsform der Erfindung die in die Datenumwandlungsvorrichtung eingelesenen Messdaten des Werkzeugs durch einen Hub, z.B. USB-Hub, ausgelesen. Alternativ kann diese Übertragung per Funk, z.B. Bluetooth oder W-LAN erfolgen.Es können also Daten des Gerätes an den HUB leitungsgeführt und/oder per Funk kontinuierlich und/oder diskontinuierlich während bzw. nach Abschluss des Einsatzes übertragen werden. Weiterhin können mehrere Geräte zeitgleich Daten bereitstellen, beispielsweise durch mehrere Anwender.

Die Daten aus dem Einsatz des Werkzeuges liegen im HUB vor.

Um Übertragungsfehler zu vermeiden bzw. aufzudecken, ist es sehr vorteilhaft, dass Messdaten in der Datenverarbeitungsvorrichtung geprüft werden. Dadurch können z.B. Schraubverbindungen mit zu geringem Drehmoment und eine unsichere Funktion vermieden werden.

Die Daten können also vor der Verwendung, z.B. einer Schraubverbindung, auf Übereinstimmung überprüft werden. Hierzu werden die Daten z.B. durch den Hub ausgelesen und in der Datenverarbeitungseinrichtung geprüft. Die Datenverarbeitungseinrichtung kann an den Anwender nach einer vorteilhaften Ausführungsform der Erfindung den Gerätestatus melden. Der Gerätestatus kann ein Zustand wie Bereitschaft, gesperrt und/oder OK oder nicht OK sein. Der Gerätestatus wird an den Anwender zurückgemeldet, so dass dieser die Anlage zur Verwendung freigeben kann, wenn z.B. ein Status "OK" gemeldet worden ist.

Wesentlich ist, dass eine Prüfung des Werkzeugs bzw. von Einstellwerten des Werkzeugs mit einem Prüfgerät auf korrekte Einstellungen erfolgt, wobei eine Überprüfung durch die Datenverarbeitungseinrichtung (EDV) mit einer Rückmeldung an den Anwender bzw. an das Fachpersonal stattfindet.

In einer vorteilhaften Weiterbildung des erfindungsgemäßen Systems ist vorgesehen, dass die Datenumwandlungsvorrichtung Einstellungen und/oder Sollwerte erfasst, wobei die Einstellungen und/oder Sollwerte durch die Datenverarbeitungseinrichtung geprüft werden. Durch diese zusätzliche Prüfung werden Übertragungsfehler entdeckt.

Zweckmäßigerweise erfolgt ein Datenabgleich von Kalibrierungsdaten durch die Datenverarbeitungseinrichtung. Die Datenverarbeitungseinrichtung kann dann die Daten der letzten Kalibrierung mit den Daten der Prüfung abgleichen und über eine Verwendung entscheiden und diese rückmelden. Dadurch ist eine erweiterte Qualitätsüberprüfung möglich.

Besonders günstig ist es, dass die Datenumwandlungsvorrichtung Sollwerte, Messwerte, Zeitstempel, Identifikationsdaten und/oder Bewertungen erzeugt und/oder speichert. Die Erfassung dieser Daten ist im Zusammenhang von sicherheitsrelevanten Bereichen wichtig.

Bei einer weiteren vorteilhaften Ausführung der Erfindung sind die Messdaten Drehmomente von Schraubverbindungen. Die zu verwendenden Daten, wie beispielsweise Schraubfallparameter können (in Abhängigkeit der Ausführung des erfindungsgemäßen Gerätes) entweder direkt an das erfindungsgemäße Gerät übermittelt werden und/oder auf einem Display für den Anwender dargestellt werden.

Eine besonders bevorzugte Weiterbildung der Erfindung zeichnet sich dadurch aus, dass ein Werkzeug zum Herstellen einer Schraubverbindung vorhanden ist, der die Messdaten erzeugt, insbesondere ein Drehmomentschlüssel. Mit der Erfindung können falsche Schraubparameter vermieden werden.

Das erfindungsgemäße System wird insbesondere zur Überwachung der Benutzung eines Werkzeuges eingesetzt. Durch dieses Verfahren ist nachkontrollierbar, wer welches Werkzeug benutzt hat und ob das Werkzeug kalibriert wurde. Auch kann festgestellt werden, ob sich das Werkzeug in einem richtigen Kalibrierzustand befindet und ob die Handhabung des Werkzeuges beispielsweise bei einem Schraubvorgang zutreffend durchgeführt wurde.

### Kurze Beschreibung der Zeichnung

Ein Ausführungsbeispiel wird anhand der Zeichnung näher erläutert, wobei weitere vorteilhafte Weiterbildungen der Erfindung und Vorteile derselben beschrieben sind.

### Bester Weg zur Ausführung der Erfindung

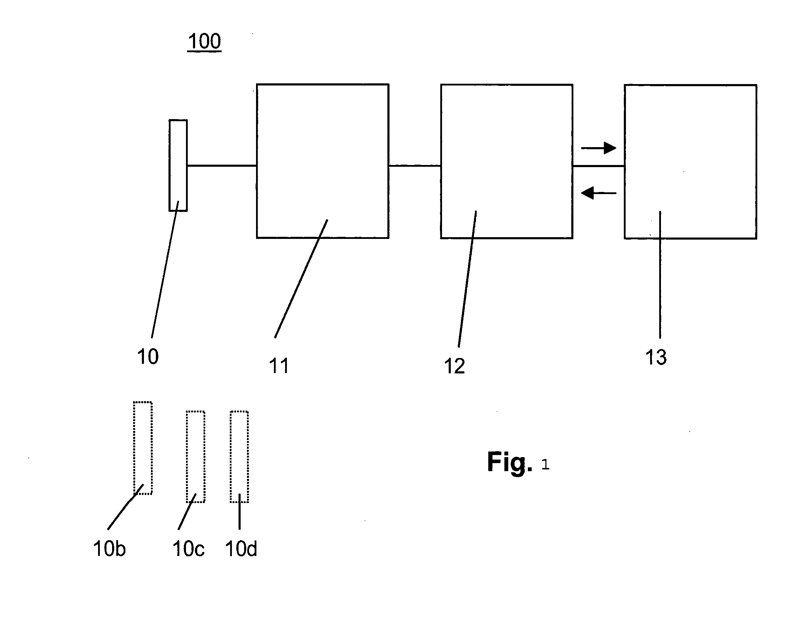

Die Fig. 1 zeigt ein erfindungsgemäßes System 100. Dieses dient zur Verarbeitung von Messdaten- und/oder Messparameterdaten, die aus einem kalibrierbaren Werkzeug 10 ausgelesen werden. Das Werkzeug 10 ist ein Werkzeug zum Herstellen einer Schraubverbindung, der die Drehmoment-Messdaten erzeugt. Insbesondere ist das Werkzeug 10 ein Drehmomentschlüssel. Die Messdaten sind also Drehmomente von Schraubverbindungen.

Das System 100 umfasst eine Datenumwandlungsvorrichtung 11 bzw. Protokollumwandlungsvorrichtung. Diese ist einerseits über eine Schnittstelle mit dem Werkzeug 10 datenmäßig verbunden. Dadurch können die Messdaten aus dem Werkzeug 10 ausgelesen werden. Über eine weitere Schnittstelle ist die Datenumwandlungsvorrichtung 11 mit einer Datenverarbeitungseinrichtung 12 datenmäßig verbunden. Die Datenumwandlungsvorrichtung 11 ist quasi ein Zusatzgerät.

Die Datenumwandlungsvorrichtung 11 kann eine Protokollumwandlung und/oder eine Prüfung der Messwerte vornehmen, so dass Messdaten aus verschiedenen Werkzeugen 10b, 10c, 10d mit unterschiedlichen Schnittstellen und/oder Protokollen durch die Datenumwandlungsvorrichtung 11 lesbar sind.

Die Datenverarbeitungseinrichtung 12 ist mit einer Datenbank 13 und/oder weiteren Datenverarbeitungseinrichtungen, insbesondere bidirektional, verbunden, wie die Figur veranschaulicht.

Die in die Datenumwandlungsvorrichtung 11 eingelesenen Messdaten des Werkzeugs 10 bzw. 10b-d können durch einen Hub, z.B. USB-Hub, oder per Funk ausgelesen werden. Die Messdaten werden in der Datenverarbeitungseinrichtung 12 geprüft, wobei dann die Datenverarbeitungseinrichtung ein Gerätestatus wie OK oder nicht OK meldet. Außerdem erfasst die Datenumwandlungsvorrichtung 11 Einstellungen und/oder Sollwerte. Die Einstellungen und/oder Sollwerte werden anschließend durch die Datenverarbeitungseinrichtung 12 geprüft. Zudem erfolgt ein Datenabgleich von Kalibrierungsdaten durch die Datenverarbeitungseinrichtung 12.Die Datenumwandlungsvorrichtung 11 kann Sollwerte, Messwerte, Zeitstempel, Identifikationsdaten und/oder Bewertungen erzeugen und/oder speichern.

Die Erfindung ist nicht auf Drehmomentschlüssel beschränkt. Es können auch andere Werkzeuge an die Datenumwandlungsvorrichtung 11 angeschlossen werden.

Ein Werkzeug kann grundsätzlich jedes kalibrierpflichtige Werkzeug sein, dazu gehören insbesondere Drehmomentschlüssel, Drehmomentschraubendreher (hand- oder maschinenbetätigt) sowie Drehmomentsensoren als Prüfling oder als eine Referenz für die Kalibriereinrichtung.

Die Erfindung kann auch auf andere Verfahren angewendet werden, beispielsweise Ultraschallverfahren oder andere zerstörungsfreie Prüfvorgänge.

### Bezugszeichenliste

- 100: System

- 10: Werkzeug
- 11: Datenumwandlungsvorrichtung
- 12: Datenverarbeitungseinrichtung
- 13: Datenbank

## Patentansprüche

1. System (100) zur Verarbeitung von Messdaten- und/oder Messparameterdaten, die aus einem kalibrierbaren Werkzeug ausgelesen werden, gekennzeichnet durch eine als eine Protokollumwandlungsvorrichtung ausgeführte Datenumwandlungsvorrichtung (11) die einerseits über eine Schnittstelle mit einem Werkzeug (10) verbindbar ist, um Messdaten aus dem Werkzeug (10) auszulesen, und die andererseits über dieselbe Schnittstelle oder über eine weitere Schnittstelle mit einer Datenverarbeitungseinrichtung (12) verbindbar ist, wobei die Datenumwandlungsvorrichtung (11) eine Protokollumwandlung vornimmt, so dass Messdaten aus verschiedenen Werkzeugen (10b, 10c, 10d) mit unterschiedlichen Schnittstellen und Protokollen durch die Datenumwandlungsvorrichtung (11) lesbar sind.

2. System nach Anspruch 1, **dadurch gekennzeichnet, dass** die Datenverarbeitungseinrichtung (12) mit einer Datenbank (13) und/oder weiteren Datenverarbeitungseinrichtungen, insbesondere bidirektional, verbunden ist, wobei die Datenumwandlungsvorrichtung (11) eine Protokollumwandlung und eine Prüfung der Messwerte vornimmt.

3. System nach Anspruch 1 oder 2, **dadurch gekennzeichnet, dass** die in die Datenumwandlungsvorrichtung (11) eingelesenen Messdaten des Werkzeugs (10) durch einen Hub oder per Funk ausgelesen werden.

4. System nach einem der vorhergehenden Ansprüche, **dadurch gekennzeichnet, dass** Messdaten in der Datenverarbeitungseinrichtung (12) geprüft werden.

5. System nach einem der vorhergehenden Ansprüche, **dadurch gekennzeichnet, dass** die Datenverarbeitungseinrichtung (12) einen Gerätestatus meldet.

6. System nach einem der vorhergehenden Ansprüche, **dadurch gekennzeichnet, dass** ein Datenabgleich von Kalibrierungsdaten durch die Datenverarbeitungseinrichtung (12) erfolgt.

7. System nach einem der vorhergehenden Ansprüche, **dadurch gekennzeichnet, dass** die Datenumwandlungsvorrichtung (11) Einstellungen und/oder Sollwerte erfasst, wobei die Einstellungen und/oder Sollwerte durch die Datenverarbeitungseinrichtung (12) geprüft werden.

8. System nach einem der vorhergehenden Ansprüche, **dadurch gekennzeichnet, dass** eine Prüfung des Werkzeugs (10) bzw. von Einstellwerten des Werkzeugs (10) mit einem Prüfgerät auf korrekte Einstellungen erfolgt, wobei eine Überprüfung durch die Datenverarbeitungseinrichtung (12) mit einer Rückmeldung stattfindet.

9. System nach einem der vorhergehenden Ansprüche, **dadurch gekennzeichnet, dass** die Datenumwandlungsvorrichtung (11) Sollwerte, Messwerte, Zeitstempel, Identifikationsdaten und/oder Bewertungen erzeugt und/oder speichert.

10. System nach einem der vorhergehenden Ansprüche, **dadurch gekennzeichnet, dass** die Messdaten Drehmomente von Schraubverbindungen sind.

11. System nach einem der vorhergehenden Ansprüche, gekennzeichnet durch ein Werkzeug (10) zum Herstellen einer Schraubverbindung, der die Messdaten erzeugt, insbesondere einen Drehmomentschlüssel.

12. Verwendung eines Systems nach einem der vorhergehenden Ansprüche zur Überwachung der Benutzung eines Werkzeuges

## Claims

1. A system (100) for processing measurement data and/or measurement parameter data which are read from a calibratable tool, **characterized by** a data conversion device (11) implemented as a protocol conversion device which, on the one hand, can be connected to a tool (10) via an interface in order to read measurement data from the tool (10), and which, on the other hand, can be connected to a data processing device (12) via the same interface or an additional interface, wherein the data conversion device (11) performs a protocol conversion so that measurement data from different tools (10b, 10c, 10d) can be read with the aid of different interfaces and protocols by the data conversion device (11).

2. The system according to claim 1, **characterized in that** the data processing device (12) is connected, in particular bidirectionally, to a database (13) and/or additional data processing devices, wherein the data conversion device (11) performs a protocol conversion and a test of the measured values.

3. The system according to claim 1 or 2, **characterized in that** the measurement data of the tool (10) that are read into the data conversion device (11) are read by a hub or via radio.

4. The system according to any one of the preceding claims, **characterized in that** measurement data are tested in the data processing device (12).

5. The system according to any one of the preceding claims, **characterized in that** the data processing device (12) reports a device status.

6. The system according to any one of the preceding claims, **characterized in that** a matching of data of calibration data is performed by the data processing device (12).

7. The system according to any one of the preceding claims, **characterized in that** the data conversion device (11) acquires settings and/order set values, wherein said settings and/order set values are tested by the data processing device (12).

8. The system according to any one of the preceding claims, **characterized in that** the tool (10) or set values of the tool (10) are tested with a test device for correct settings, wherein inspection takes place via the data processing device (12) with a feedback message.

9. The system according to any one of the preceding claims, **characterized in that** the data conversion device (11) generates and/or stores set values, measured values, time stamps, identification data and/or validations.

10. The system according to any one of the preceding claims, **characterized in that** the measurement data are torque values of screw connections.

11. The system according to any one of the preceding claims, **characterized by** a tool (10) for producing a screw connection which generates the measurement data, in particular a torque wrench.

12. Use of a system according to any one of the preceding claims, for monitoring the use of a tool.

## Revendications

1. Système (100) pour le traitement de données de mesure et/ou de données de paramètres de mesure qui sont lues à partir d'un outil pouvant être étalonné, **caractérisé par** un dispositif de conversion de données (11) réalisé en tant que dispositif de conversion de protocoles qui, d'une part, peut être relié à un outil (10) par l'intermédiaire d'une interface afin de lire des données de mesure à partir de l'outil (10) et qui, d'autre part, peut être relié à un dispositif de traitement de données (12) par l'intermédiaire de la même interface ou par l'intermédiaire d'une autre interface, le dispositif de conversion de données (11) procédant à une conversion de protocoles de sorte que des données de mesure provenant de différents outils (10b, 10c, 10d) puissent être lues avec différentes interfaces et protocoles par le dispositif de conversion de données (11).

2. Système selon la revendication 1, **caractérisé en ce que** le dispositif de traitement de données (12) est en liaison avec une base de données (13) et/ou d'autres dispositifs de traitement de données, en particulier de manière bidirectionnelle, le dispositif de conversion de données (11) procédant à une conversion de protocoles et à une vérification des valeurs de mesure.

3. Système selon la revendication 1 ou 2, **caractérisé en ce que** les données de mesure de l'outil (10) mises en mémoire dans le dispositif de conversion de données (11) sont lues grâce à un concentrateur ou par radio.

4. Système selon l'une des revendications précédentes, **caractérisé en ce que** des données de mesure dans le dispositif de traitement de données (12) sont vérifiées.

5. Système selon l'une des revendications précédentes, **caractérisé en ce que** le dispositif de traitement de données (12) signale un statut d'appareil.

6. Système selon l'une des revendications précédentes, **caractérisé en ce qu'**une comparaison de données de données d'étalonnage a lieu grâce au dispositif de traitement de données (12).

7. Système selon l'une des revendications précédentes, **caractérisé en ce que** le dispositif de conversion de données (11) saisit des réglages et/ou valeurs de consigne, les réglages et/ou valeurs de consigne étant vérifié(e)s par le dispositif de traitement de données (12).

8. Système selon l'une des revendications précédentes, **caractérisé en ce qu'**une vérification de l'outil (10) ou de valeurs de réglage de l'outil (10) concernant des réglages corrects a lieu avec un appareil de vérification, un contrôle par le dispositif de traitement de données (12) avec une information en retour ayant lieu.

9. Système selon l'une des revendications précédentes, **caractérisé en ce que** le dispositif de conversion de données (11) génère et/ou garde en mémoire des valeurs de consigne, des valeurs de mesure, des chronotimbres, des données d'identification et/ou des évaluations.

10. Système selon l'une des revendications précédentes, **caractérisé en ce que** les données de mesure sont des couples d'assemblages par boulons.

11. Système selon l'une des revendications précédentes, **caractérisé par** un outil (10) pour la fabrication d'un assemblage par boulons, lequel génère les données de mesure, en particulier une clé dynamométrique.

12. Utilisation d'un système selon l'une des revendications précédentes pour surveiller l'utilisation d'un outil.
